# EUROPEAN PATENT APPLICATION

(11) **EP 3 467 560 A1**
(43) Date of publication of application: **10.04.2019**
(21) Application number: 17801950.1
(22) Date of filing: 03.03.2017
(51) Int. Cl.: G02B 6/44, B29C 47/02

(54) **ALL-DRY OPTICAL FIBER RIBBON LOOSE TUBE AND MANUFACTURING METHOD THEREOF**

(30) Priority: 24.05.2016 CN 201610347307
(71) Applicant: Fiberhome Telecommunication Technologies Co., Ltd, Wuhan, Hubei 430000 (CN)
(72) Inventor: WANG, Long, Wuhan Hubei 430000 (CN); LIU, Xiaohong, Wuhan Hubei 430000 (CN); ZHANG, Gang, Wuhan Hubei 430000 (CN)
(74) Representative: Harrison, Michael Robert
(86) International application number: PCT/CN2017/075533
(87) International publication number: WO 2017/202099

(57) **Abstract**

An all-dry optical fiber ribbon loose tube comprises a loose tube (1) with a circular cross section, and a fiber stack formed by stacking one or more optical fiber ribbons (2), and an outer surface of each fiber ribbon (2) is coated with talc powder (3). Water-blocking tapes (4, 5, 6, 7) are disposed around an outer surface of the fiber stack, and the water blocking tapes (4, 5, 6, 7) and the stack of the fiber ribbons (2) are spirally twisted and laid in the loose tube (1). The all-dry optical fiber ribbon loose tube of the present invention replaces a conventional water-blocking gel with the talcum powder (3) and the water-blocking tapes (4, 5, 6, 7), thus making it possible to reduce an outer diameter of the fiber ribbon loose tube while ensuring that performance is not affected, and also solving problems in which a gel of an existing optical fiber ribbon loose tube is difficult to clean and pollutes the environment in production and construction processes.

## Description

### Field of the Invention

The present invention relates to the communications field, and in particular to an all-dry optical fiber ribbon loose tube and a manufacturing method thereof.

### Description of the Prior Art

With expansion of the coverage range of fiber to the home and extension of the network bandwidth, the demand of operators for optical fiber cable is growing rapidly. However, underground pipeline network resources of a city for cable laying are finite. The high-count optical fiber ribbon cable solves the foregoing problem well because of its large number of optical fiber cores and small outer diameter, and therefore the demand for it is rapidly growing. In addition, with increasingly intense competition in the optical cable manufacturing industry, saving costs by means of miniaturization of the structure of the high-count optical fiber ribbon cable is a desirable trend.

In the existing optical fiber ribbon loose tube production process, optical fiber ribbons are spirally put into a loose tube; and the loose tube is filled with water blocking jelly for moulding. The water blocking jelly can prevent mutual friction between the optical fiber ribbons that causes attenuation. The manner of spirally putting the optical fiber ribbons into the loose tube can ensure that the optical fiber has an excess length in the loose tube, and ensure that the subsequently produced optical cable has better bending and twisting performances. However, roundness of the tube filled with excessively less water blocking jelly is nonuniform, and thus the outer diameter size of the loose tube becomes difficult to be reduced.

In addition, in the production and construction processes, the jelly of the existing optical fiber ribbon loose tube not only is difficult to be cleaned, but also pollutes the environment. Therefore, ensuring a clean and non-polluting production process of the dry optical fiber ribbon loose tube cable becomes a development direction of the optical cable industry.

### Summary of the Invention

The present invention in its various aspects is as set out in the appended claims.

A technical problem to be solved by the present invention is that the outer diameter size of the existing optical fiber ribbon loose tube is difficult to be reduced because roundness of the tube filled with excessively less water blocking jelly is nonuniform; and the jelly of the existing optical fiber ribbon loose tube is difficult to be cleaned and pollutes the environment in the production and construction processes.

To solve the above-described technical problem, the technical solution adopted by the present invention is to provide an all-dry optical fiber ribbon loose tube, comprising a loose tube with a circular cross-section and an optical fiber laminate.

The optical fiber laminate is formed by laminating one or more optical fiber ribbons. An external surface of each optical fiber ribbon is coated with a layer of talcum powder.

Water blocking tapes are disposed around an external surface of the optical fiber laminate. The water blocking tapes and the optical fiber ribbon laminate are twisted spirally and laid in the loose tube.

In the above-described solution, a twist pitch of the optical fiber ribbon laminate and the water blocking tapes in the loose tube is 300-800 mm.

In the above-described solution, the water blocking tapes comprise an upper water blocking tape, a lower water blocking tape, a left water blocking tape, and a right water blocking tape symmetrically disposed around a center of the optical fiber ribbon laminate.

The upper water blocking tape and the lower water blocking tape are the same and symmetrically distributed at two lateral sides of the optical fiber ribbon laminate. The left water blocking tape and the right water blocking tape are the same and symmetrically distributed at two vertical sides of the optical fiber ribbon laminate.

In the above-described solution, thicknesses of the upper water blocking tape, the lower water blocking tape, the left water blocking tape, and the right water blocking tape are the same; widths of the upper water blocking tape and the lower water blocking tape are two thirds of a lateral width of the optical fiber ribbon laminate; and widths of the left water blocking tape and the right water blocking tape are two thirds of a vertical width of the optical fiber ribbon laminate.

The present invention further provides a manufacturing method of an all-dry optical fiber ribbon loose tube, comprising the following steps:
optical fiber ribbons are spirally paid off by an optical fiber pay-off stranding cage by way of gradual converging, and then enter a talcum powder box after being dispersed by a dispersing plate inside the optical fiber pay-off stranding cage, and a surface of each optical fiber ribbon is coated with talcum powder;
the optical fiber ribbons coated with talcum powder pass through a tape pay-off stranding cage, and then enter a laminating die together with water blocking tapes which are spirally paid off by the tape pay-off stranding cage;
the optical fiber ribbons and the water blocking tapes are reshaped by the laminating die to output a spiral optical fiber ribbon laminate;
the optical fiber ribbon laminate spirally enters an extruder to extrude a circular loose tube for moulding by cooling;
a diameter measuring instrument measures whether an outer diameter of the optical fiber ribbon loose tube satisfies a production standard, and a portion not satisfying the production standard is recorded; and
the optical fiber ribbon loose tube measured by the diameter measuring instrument is coiled up by a take-up stand by means of traction.

In the above-described method, the optical fiber pay-off stranding cage, the tape pay-off stranding cage, and the laminating die are rotated synchronously; and spiral pitches of the optical fiber pay-off stranding cage and the tape pay-off stranding cage are the same.

In the above-described method, a reshaping hole for reshaping the optical fiber ribbon is disposed at a center of the laminating die; and four location holes for locating the water blocking tapes are symmetrically disposed around the reshaping hole.

In the above-described method, the reshaping hole is a rectangular hole; the location holes are classified into upper and lower location holes and left and right location holes respectively corresponding to a length and a width of the reshaping hole; and lengths of the upper and lower location holes and the left and right location holes are respectively two thirds of the length and the width of the reshaping hole.

In the present invention, traditional water blocking jelly is substituted by the talcum powder and the water blocking tapes. The talcum powder can prevent relative friction between the optical fiber ribbons that causes attenuation and prevent adhesion between the optical fiber ribbons resulted from long time contact. Water-absorbent resin in the water blocking tapes rapidly swells when contacting water, to fill up an inner void of an optical cable, thereby preventing water from longitudinally flowing in the optical cable. Therefore, it becomes possible to reduce an outer diameter size of the optical fiber ribbon loose tube in the premise that a performance of an improved all-dry optical fiber ribbon loose tube is ensured not to be affected. In addition, the problem that the jelly of the existing optical fiber ribbon loose tube is difficult to be cleaned and pollutes the environment in the production and construction processes is solved.

### Brief Description of the Drawings

FIG. 1 is a view of a cross section of an all-dry optical fiber ribbon loose tube provided by the present invention.
FIG. 2 is a schematic view of a manufacturing method of an all-dry optical fiber ribbon loose tube provided by the present invention.
FIG. 3 is a schematic view of an outlet of a laminating die of the present invention.

### Detailed Description

Similar to the traditional optical fiber ribbon loose tube, an all-dry optical fiber ribbon loose tube of the present invention has bending and twisting resistance in all directions. In addition, substituting liquid water blocking jelly with solid water blocking tapes can not only reduce environmental pollution, but also reduce an outer diameter size of the optical fiber ribbon loose tube in a case in which an optical cable performance is ensured not to be damaged.

The present invention will be described in detail below with reference to the drawings in combination with the specific embodiments.

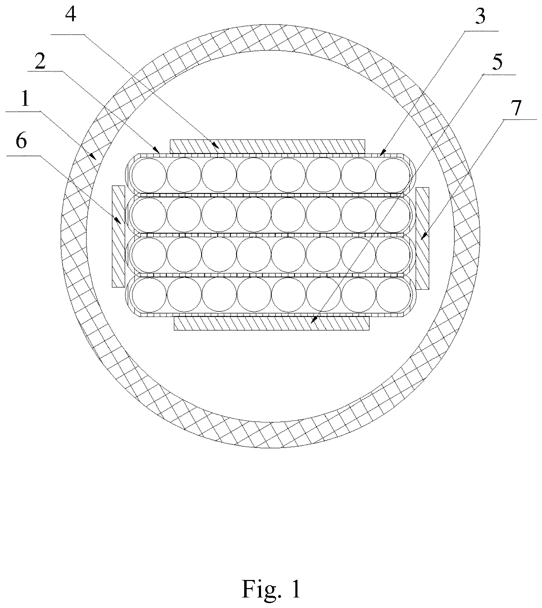

As shown in FIG. 1, the present invention provides an all-dry optical fiber ribbon loose tube, comprising a loose tube 1 with a circular cross-section and an optical fiber laminate. Water blocking tapes are disposed around an external surface of the optical fiber laminate. The optical fiber ribbon laminate and the water blocking tapes are twisted spirally and laid in the loose tube 1. The water blocking tapes can fill up an interior of the loose tube 1 rapidly after absorbing water, to prevent water from flowing into the loose tube 1. The optical fiber ribbon laminate is formed by laminating one or more optical fiber ribbons 2. An external surface of each optical fiber ribbon 2 is coated with a layer of talcum powder 3, to prevent relative friction between the optical fiber ribbons 2 that causes attenuation, adhesion between neighboring optical fiber ribbons, and adhesion between the optical fiber ribbon and an inner wall of the loose tube.

A manufacturing material of the loose tube 1 of the present invention is polybutylene terephthalate (PBT), thermoplastic elastomer (TPE), polycarbonate (PC), or geranyl pyrophosphate (GPP). A twist pitch of the optical fiber ribbon laminate and the water blocking tapes in the loose tube 1 is 300-800 mm.

In the present invention, the water blocking tapes comprise an upper water blocking tape 4, a lower water blocking tape 5, a left water blocking tape 6, and a right water blocking tape 7 symmetrically disposed around a center of the optical fiber ribbon laminate.

The upper water blocking tape 4 and the lower water blocking tape 5 are the same and symmetrically distributed at two lateral sides of the optical fiber ribbon laminate. The left water blocking tape 6 and the right water blocking tape 7 are the same and symmetrically distributed at two vertical sides of the optical fiber ribbon laminate. Such a manner of disposing the water blocking tapes can prevent four optical fibers at four corners of the optical fiber ribbon laminate from bearing excess forces and therefore causing attenuation. In order to ensure that the water blocking tapes can fill up the interior of the loose tube rapidly after absorbing water and prevent water from axially flowing into the loose tube, thicknesses of the upper water blocking tape 4, the lower water blocking tape 5, the left water blocking tape 6, and the right water blocking tape 7 are the same; widths of the upper water blocking tape 4 and the lower water blocking tape 5 are two thirds of a lateral width of the optical fiber ribbon laminate; and widths of the left water blocking tape 6 and the right water blocking tape 7 are two thirds of a vertical width of the optical fiber ribbon laminate.

In the all-dry optical fiber ribbon loose tube of the present invention, traditional water blocking jelly is substituted by the talcum powder and the water blocking tapes. The talcum powder can prevent relative friction between the optical fiber ribbons that causes attenuation and prevent adhesion between the optical fiber ribbons resulted from long time contact. The water blocking tapes are disposed at four sides of the optical fiber ribbon laminate, to achieve a water blocking effect. Therefore, a problem that an outer diameter size of an existing optical fiber ribbon loose tube is difficult to be reduced and jelly of the existing optical fiber ribbon loose tube is difficult to be cleaned and pollutes the environment in production and construction processes is solved in the premise that the performance of the all-dry optical fiber ribbon loose tube is ensured not to be affected.

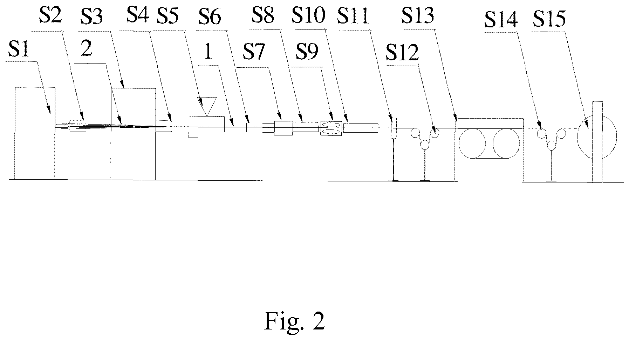

As shown in FIG. 2, the present invention further provides a manufacturing method of the all-dry optical fiber ribbon loose tube, specifically comprising the following steps:
In a first step: optical fiber ribbons 2 are spirally paid off by an optical fiber pay-off stranding cage S1 by way of gradual converging, and then enter a talcum powder box S2 after being dispersed by a dispersing plate inside the optical fiber pay-off stranding cage; and a surface of each optical fiber ribbon is coated with talcum powder by a built-in nozzle in the talcum powder box S2.
In a second step: the optical fiber ribbons 2 coated with the talcum powder pass through a tape pay-off stranding cage S3, and then enter a laminating die S4 together with water blocking tapes which are spirally paid off by the tape pay-off stranding cage S3.
In a third step: the optical fiber ribbons 2 and the water blocking tapes are reshaped by the laminating die S4 to output a spiral optical fiber ribbon laminate.
In a fourth step: the optical fiber ribbon laminate spirally enters an extruder S5, to extrude a circular loose tube 1 by means of tube extruding moulding, and is hauled by a caterpillar tractor S9 to pass through a hot water tank S6, a hot water box S7, and a warm water tank S8 and finally enter a cold water tank S10 for moulding by cooling.
In a fifth step: a diameter measuring instrument S11 measures whether an outer diameter of the optical fiber ribbon loose tube satisfies a production standard; and a control computer records a portion not satisfying the production standard, to facilitate offline maintenance.
In a sixth step: the optical fiber ribbon loose tube measured by the diameter measuring instrument S11 is coiled up by a take-up stand S15 by means of a traction dancer accumulator S12 (controlling tension of the optical fiber ribbon loose tube), a dual-capstan tractor S13 (controlling a production excess length of the optical fiber ribbon loose tube), and a take-up dancer accumulator S14 (controlling take-up tension of the optical fiber ribbon loose tube, so that the optical fiber ribbon loose tube is in a tensional state when being taken up).

In the present invention, the optical fiber pay-off stranding cage S1, the tape pay-off stranding cage S3, and the laminating die S4 are rotated synchronously. Moreover, spiral pitches of the optical fiber pay-off stranding cage S1 and the tape pay-off stranding cage S3 are the same, to ensure that the optical fiber ribbon laminate outputted by the laminating die S4 is spiral.

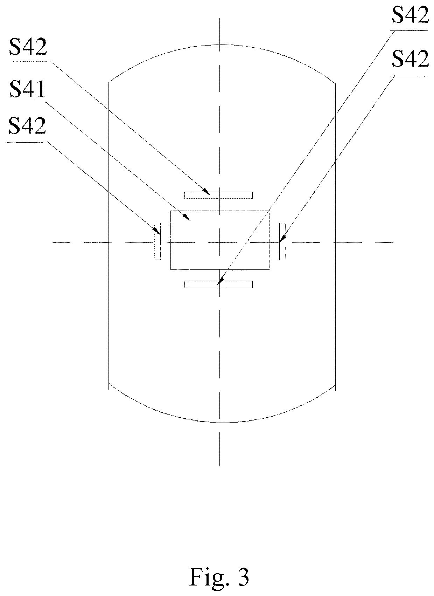

As shown in FIG.3, a reshaping hole S41 for reshaping the optical fiber ribbon 2 is disposed at a center of the laminating die S4 of the present invention. Four location holes S42 for locating the water blocking tapes are symmetrically disposed around the reshaping hole S41, to ensure that relative positions of the optical fiber ribbon laminate and the surrounding water blocking tapes are fixed, thereby preventing the water blocking tapes from being wound around optical fibers at four corners of the optical fiber ribbon laminate, in which case attenuation may be caused because the four optical fibers at the four corners bear nonuniform forces. In a general situation, the reshaping hole S41 is a rectangular hole, so that the optical fiber ribbons are converged into a rectangular optical fiber ribbon laminate. The location holes S42 are classified into upper and lower location holes and left and right location holes respectively corresponding to a length and a width of the reshaping hole S41. Lengths of the upper and lower location holes and lengths of the left and right location holes are respectively two thirds of the length and the width of the reshaping hole, to prevent the attenuation resulted from the four optical fibers at the four corners bearing nonuniform forces.

Obviously, one skilled in the art could make various modifications and variations without departing from the spirit and scope of the present invention. Therefore, if the modifications and the variations of the present invention are in the scope of claims and equivalent technologies of the present invention, the modifications and the variations shall be included in the present invention.

## Claims

1. An all-dry optical fiber ribbon loose tube, comprising a loose tube (1) with a circular cross-section and an optical fiber laminate, wherein:
the optical fiber laminate is formed by laminating one or more optical fiber ribbons (2), and an external surface of each optical fiber ribbon is coated with a layer of talcum powder (3);
water blocking tapes (4,5,6,7) are disposed around an external surface of the optical fiber laminate, and the water blocking tapes and the optical fiber ribbon laminate are twisted spirally and laid in the loose tube.

2. The all-dry optical fiber ribbon loose tube according to claim 1, wherein a twist pitch of the optical fiber ribbon laminate and the water blocking tapes in the loose tube is 300-800 mm.

3. The all-dry optical fiber ribbon loose tube according to claim 1 or 2, wherein the water blocking tapes comprise an upper water blocking tape, a lower water blocking tape, a left water blocking tape, and a right water blocking tape symmetrically disposed around a center of the optical fiber ribbon laminate;
the upper water blocking tape and the lower water blocking tape are the same and symmetrically distributed at two lateral sides of the optical fiber ribbon laminate, and the left water blocking tape and the right water blocking tape are the same and symmetrically distributed at two vertical sides of the optical fiber ribbon laminate.

4. The all-dry optical fiber ribbon loose tube according to claim 3, wherein thicknesses of the upper water blocking tape, the lower water blocking tape, the left water blocking tape, and the right water blocking tape are the same; widths of the upper water blocking tape and the lower water blocking tape are two thirds of a lateral width of the optical fiber ribbon laminate; and widths of the left water blocking tape and the right water blocking tape are two thirds of a vertical width of the optical fiber ribbon laminate.

5. A manufacturing method of an all-dry optical fiber ribbon loose tube, comprising the following steps:
optical fiber ribbons are spirally paid off by an optical fiber pay-off stranding cage (S1) by way of gradual converging, and then enter a talcum powder box (S2) after being dispersed by a dispersing plate inside the optical fiber pay-off stranding cage, and a surface of each optical fiber ribbon is coated with talcum powder;
the optical fiber ribbons coated with talcum powder pass through a tape pay-off stranding cage (S3), and then enter a laminating die (S4) together with water blocking tapes which are spirally paid off by the tape pay-off stranding cage;
the optical fiber ribbons and the water blocking tapes are reshaped by the laminating die to output a spiral optical fiber ribbon laminate;
the optical fiber ribbon laminate spirally enters an extruder (S5) to extrude a circular loose tube for moulding by cooling;
a diameter measuring instrument (S11) measures whether an outer diameter of the optical fiber ribbon loose tube satisfies a production standard, and a portion not satisfying the production standard is recorded; and
the optical fiber ribbon loose tube measured by the diameter measuring instrument is coiled up by a take-up stand (S15) by means of traction.

6. The method according to claim 5, wherein the optical fiber pay-off stranding cage, the tape pay-off stranding cage, and the laminating die are rotated synchronously; and spiral pitches of the optical fiber pay-off stranding cage and the tape pay-off stranding cage are the same.

7. The method according to claim 5 or 6, wherein a reshaping hole for reshaping the optical fiber ribbon is disposed at a center of the laminating die; and four location holes for locating the water blocking tapes are symmetrically disposed around the reshaping hole.

8. The method according to claim 7, wherein the reshaping hole is a rectangular hole; the location holes are classified into upper and lower location holes and left and right location holes respectively corresponding to a length and a width of the reshaping hole; and lengths of the upper and lower location holes and the left and right location holes are respectively two thirds of the length and the width of the reshaping hole.
